# EUROPÄISCHE PATENTSCHRIFT

(11) **EP 3 659 165 B1**
(45) Veröffentlichungstag und Bekanntmachung des Hinweises auf die Patenterteilung: **11.08.2021**
(21) Anmeldenummer: 18769048.2
(22) Anmeldetag: 23.08.2018
(51) Int. Cl.: H01H 33/40, H01H 3/30, H01H 3/40, H01H 33/42, F16H 29/00

(54) **SPANNGETRIEBE ZUM SPANNEN EINER SPEICHERFEDER EINES FEDERSPEICHERANTRIEBS**
A TENSIONING MECHANISM FOR LOADING A SPRING ENERGY ACCUMULATOR OF THE SPRING-LOADED DRIVE
UN MÉCANISME DE TRANSMISSION POUR ACCUMULER D'ÉNERGIE À RESSORT D'UN ACCUMULATEUR À RESSORT

(30) Priorität: 22.09.2017 DE 102017216805
(43) Veröffentlichungstag der Anmeldung: 03.06.2020
(73) Patentinhaber: Siemens Energy Global GmbH & Co. KG, 81739 München (DE)
(72) Erfinder: BARTZ, Michael, 12627 Berlin (DE); BIETZ, Marian, 13591 Berlin (DE); BINNER, Lukas, 13088 Berlin (DE); LUTZKE, Gunnar, 12205 Berlin (DE); LÖBNER, Friedrich, 10245 Berlin (DE)
(86) Internationale Anmeldenummer: PCT/EP2018/072792
(87) Internationale Veröffentlichungsnummer: WO 2019/057438

(56) Entgegenhaltungen:
- CN-A- 106 783 254
- DE-A1- 10 324 196
- DE-A1-102014 224 405
- US-A- 2 924 150

## Beschreibung

Die Erfindung betrifft ein Spanngetriebe zum Spannen einer Speicherfeder eines Federspeicherantriebs, insbesondere für einen Leistungsschalter.

Federspeicherantriebe werden insbesondere als Antriebe zum Schalten von Leistungsschaltern verwendet. Leistungsschalter sind elektrische Schalter, die für hohe elektrische Ströme und Spannungen ausgelegt sind, um insbesondere hohe Überlastströme und Kurzschlussströme sicher abschalten zu können. Dazu weisen Leistungsschalter eine Unterbrechereinheit mit wenigstens einem bewegbaren Schaltelement zum Öffnen und Schließen eines Strompfads auf. Zum Bewegen der Schaltelemente bei einem Schaltvorgang halten Leistungsschalter eine für den Schaltvorgang benötigte Energie bereit. Federspeicherantriebe speichern diese Energie in Speicherfedern, die zur Speicherung der Energie gespannt werden. Eine Speicherfeder wird beispielsweise mit einem Spannmotor gespannt, der über ein Spanngetriebe mit der Speicherfeder verbunden ist. Analog werden Federspeicherantriebe auch beispielsweise als Antriebe zum Schalten von Lasttrennschaltern verwendet. Ein solches Spanngetriebe ist aus DE 10 2014 224405 A1 bekannt.

Der Erfindung liegt die Aufgabe zugrunde, ein verbessertes Spanngetriebe zum Spannen einer Speicherfeder eines Federspeicherantriebs anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Ein erfindungsgemäßes Spanngetriebe zum Spannen einer Speicherfeder eines Federspeicherantriebs umfasst ein an die Speicherfeder gekoppeltes Spannrad, eine an das Spannrad gekoppelte Zwischenwelle, ein von einem Spannmotor antreibbares Zwischenrad, einen an das Zwischenrad gekoppelten Freilauf, einen Arretierungsmechanismus zum lösbaren Arretieren des Spannrads in einem gespannten Zustand der Speicherfeder und eine Klauenkupplung, die den Freilauf zum Spannen der Speicherfeder an die Zwischenwelle koppelt und in dem gespannten Zustand der Speicherfeder von der Zwischenwelle entkoppelt. Die Klauenkupplung umfasst eine drehfest an die Zwischenwelle gekoppelte erste Kupplungsbacke, eine mit dem Freilauf verbundene zweite Kupplungsbacke und einen zwischen den Kupplungsbacken angeordneten und drehfest an die erste Kupplungsbacke gekoppelten Synchronring. Die erste Kupplungsbacke ist zwischen einer ersten Endstellung, in der sie an der zweiten Kupplungsbacke anliegt und die sie beim Spannen der Speicherfeder animmt, und einer zweiten Endstellung, in der sie von der zweiten Kupplungsbacke getrennt ist und die sie in einem gespannten Zustand der Speicherfeder annimmt, parallel zu einer Längsachse der Zwischenwelle verschiebbar. Der Synchronring wird beim Bewegen der ersten Kupplungsbacke von der zweiten Endstellung in die erste Endstellung an die zweite Kupplungsbacke gedrückt.

Die Zwischenwelle überträgt beim Spannen der Speicherfeder Drehungen des Zwischenrads über den Freilauf und die Klauenkupplung auf das Spannrad und ermöglicht dadurch das Spannen der Speicherfeder durch den Spannmotor, der direkt oder indirekt das Zwischenrad antreibt. Durch den Arretierungsmechanismus ist das Spannrad in dem gespannten Zustand der Speicherfeder arretierbar, so dass die Speicherfeder gespannt bleibt bis die Arretierung zur Freigabe der von der Speicherfeder gespeicherten Energie gelöst wird. Die Klauenkupplung entkoppelt in dem gespannten Zustand der Speicherfeder die Zwischenwelle von dem Freilauf und dem Zwischenrad, so dass durch das Zwischenrad, insbesondere beim Nachlaufen des Spannmotors, keine Kräfte auf die Zwischenwelle und das Spannrad übertragen werden. Ohne die Klauenkupplung würden diese Kräfte in dem gespannten Zustand der Speicherfeder auf die Zwischenwelle und an die Zwischenwelle gekoppelte Komponenten des Spanngetriebes wie Komponenten des Arretierungsmechanismus übertragen werden und diese verspannen und belasten. Die Klauenkupplung entlastet daher vorteilhaft die Zwischenwelle und an sie gekoppelte Komponenten des Spanngetriebes in dem gespannten Zustand der Speicherfeder.

Durch die drehfeste Kopplung der ersten Kupplungsbacke an die Zwischenwelle werden Drehungen der Zwischenwelle auf die erste Kupplungsbacke übertragen. Die Verschiebbarkeit der ersten Kupplungsbacke ermöglicht deren Kopplung an die zweite Kupplungsbacke und den mit dieser verbundenen Freilauf zum Spannen der Speicherfeder und die Entkopplung der Kupplungsbacken im gespannten Zustand der Speicherfeder.

Vor dem Schließen der Klauenkupplung steht die zweite Kupplungsbacke noch still, während sich die erste Kupplungsbacke durch ihre drehfeste Kopplung an die Zwischenwelle bereits dreht. Ohne den Synchronring würde die erste Kupplungsbacke beim Schließen der Klauenkupplung die bis dahin noch stillstehende zweite Kupplungsbacke durch einen Stoß plötzlich in Drehung versetzen, der zur Abnutzung der Kupplungsbacken führen kann. Da der Synchronring drehfest mit der ersten Kupplungsbacke verbunden ist, erzeugt das Andrücken des Synchronrings an die zweite Kupplungsbacke beim Schließen der Klauenkupplung eine Reibungskraft zwischen dem Synchronring und der zweiten Kupplungsbacke, die eine Drehzahl der zweiten Kupplungsbacke allmählich der Drehzahl der ersten Klauenkupplung anpasst. Der Synchronring reduziert daher vorteilhaft die Belastung und Abnutzung der Kupplungsbacken beim Schließen der Klauenkupplung.

Eine Ausgestaltung der Erfindung sieht vor, dass der Synchronring relativ zu der ersten Kupplungsbacke parallel zu der Längsachse der Zwischenwelle verschiebbar ist und an die erste Kupplungsbacke durch ein Federelement gekoppelt ist, das eine zu der Längsachse der Zwischenwelle parallele Federkraft zwischen dem Synchronring und der ersten Kupplungsbacke ausübt. Diese Kopplung des Synchronrings an die erste Kupplungsbacke durch ein Federelement ermöglicht eine allmähliche Zunahme der Reibungskraft zwischen dem Synchronring und der zweiten Kupplungsbacke beim Schließen der Klauenkupplung durch die zunehmende Federkraft des Federelements und dämpft dadurch das Schließen der Klauenkupplung vorteilhaft weiter.

Eine weitere Ausgestaltung der Erfindung sieht vor, dass der Synchronring und die zweite Kupplungsbacke zueinander korrespondierende Reibungsflächen aufweisen, die beim Andrücken des Synchronrings an die zweite Kupplungsbacke aneinander anliegen und als Kegelstumpfflächen ausgeführt sind. Die Kopplung zwischen dem Synchronring und der zweiten Kupplungsbacke durch als Kegelstumpfflächen ausgeführte Reibungsflächen beim Schließen der Klauenkupplung erhöht vorteilhaft die Anspresskraft, die die Reibung zwischen dem Synchronring und der zweiten Kupplungsbacke beim Andrücken des Synchronrings an die zweite Kupplungsbacke erzeugt.

Eine weitere Ausgestaltung der Erfindung sieht vor, dass die erste Kupplungsbacke durch ein Koppelelement an die Zwischenwelle gekoppelt ist, wobei das Koppelelement durch eine senkrecht zu einer Längsachse der Zwischenwelle verlaufende Queröffnung in der Zwischenwelle geführt ist und in der Queröffnung zwischen einer die erste Endstellung der ersten Kupplungsbacke definierenden ersten Position und einer die zweite Endstellung der ersten Kupplungsbacke definierenden zweiten Position verschiebbar ist. Das Koppelelement ist beispielsweise als ein Rohr oder Bolzen ausgebildet, dessen Längsachse senkrecht zur Längsachse der Zwischenwelle angeordnet ist und dessen Enden in Ausnehmungen in der ersten Kupplungsbacke hineinragen. Das Koppelelement ermöglicht ein Verschieben der ersten Kupplungsbacke durch ein Verschieben des Koppelelements.

Ferner ist beispielsweise ein Schaltstift vorgesehen, der in einer entlang der Längsachse der Zwischenwelle verlaufenden Längsöffnung in der Zwischenwelle verschiebbar gelagert und an das Koppelelement gekoppelt ist. Dadurch kann die erste Kupplungsbacke über das Koppelement durch Verschieben des Schaltstifts zwischen ihren Endstellungen verschoben werden.

Ferner ist beispielsweise vorgesehen, dass ein Absteuerende des Schaltstiftes aus der Längsöffnung in der Zwischenwelle herausragt und an dem Spannrad ein Absteuerelement angeordnet ist, das das Absteuerende des Schaltstifts im gespannten Zustand der Speicherfeder zu der Längsöffnung hin verschiebt, so dass das Koppelelement von seiner ersten in seine zweite Position verschoben wird. Beispielsweise weist das Absteuerelement ein radial von dem Spannrad abstehendes Kontaktende mit einer schrägen Kontaktfläche auf, die beim Verschieben des Schaltstifts an dessen Absteuerende anliegt. Durch das Absteuerelement wird das Spannrad in einer Stellung, in der die Speicherfeder gespannt ist, an den Schaltstift gekoppelt, wobei das Absteuerelement den Schaltstift verschiebt und dadurch die Klauenkupplung öffnet.

Vorzugsweise verläuft jede der beiden Kupplungsbacken ringförmig um die Zwischenwelle herum. Dadurch wird in einfacher Weise eine zuverlässige Kopplung der Klauenkupplung an die Zwischenwelle und den Freilauf ermöglicht.

Ferner ist beispielsweise eine an die erste Kupplungsbacke gekoppelte Rückstellfeder vorgesehen, die in der zweiten Endstellung der ersten Kupplungsbacke eine Federkraft in Richtung der ersten Endstellung auf die erste Kupplungsbacke ausübt. Durch die Rückstellfeder kann die erste Kupplungsbacke von ihrer zweiten Endstellung in die erste Endstellung geschoben werden, wenn das Absteuerelement beim Entspannen der Speicherfeder den Schaltstift freigibt. Dadurch wird die Klauenkupplung wieder geschlossen und das Spanngetriebe ist nach dem Entspannen der Speicherfeder zum erneuten Spannen der Speicherfeder bereit.

Der Freilauf weist beispielsweise einen um die Zwischenwelle herum verlaufenden Freilaufring auf, mit dem die zweite Kupplungsbacke verbunden ist. Dadurch wird eine zuverlässige Kopplung der Klauenkupplung an den Freilauf ermöglicht.

Das Zwischenrad ist beispielsweise über ein Kegelradgetriebe durch den Spannmotor antreibbar. Dadurch wird eine Umlenkung der Antriebskraft des Spannmotors erreicht, die eine kompakte Bauform des Federspeicherantriebs ermöglicht.

Der Arretierungsmechanismus weist beispielsweise eine fest mit dem Spannrad verbundene Kurvenscheibenrolle und eine Einklinke, die die Kurvenscheibenrolle zum Arretieren des Spannrads fixiert, auf. Dies ermöglicht ein zuverlässiges lösbares Arretieren des Spannrads durch einen einfachen und kostengünstigen Arretierungsmechanismus.

Ein erfindungsgemäßer Federspeicherantrieb weist ein erfindungsgemäßes Spanngetriebe auf. Die Vorteile eines derartigen Federspeicherantriebs ergeben sich aus den oben genannten Vorteilen eines erfindungsgemäßen Spanngetriebes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische und teilweise geschnittene Darstellung eines Spanngetriebes, und
- FIG 2: einen vergrößerten Ausschnitt der Figur 1.

Einander entsprechende Teile sind in den Figuren mit denselben Bezugszeichen versehen.

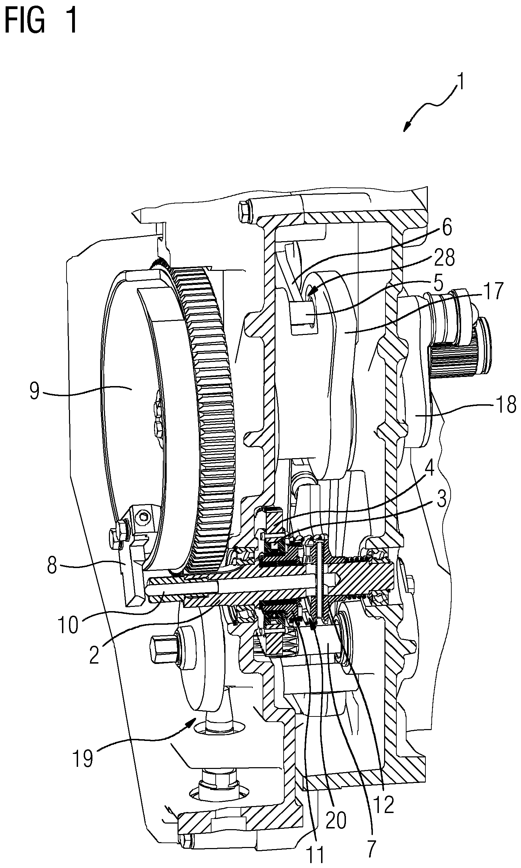

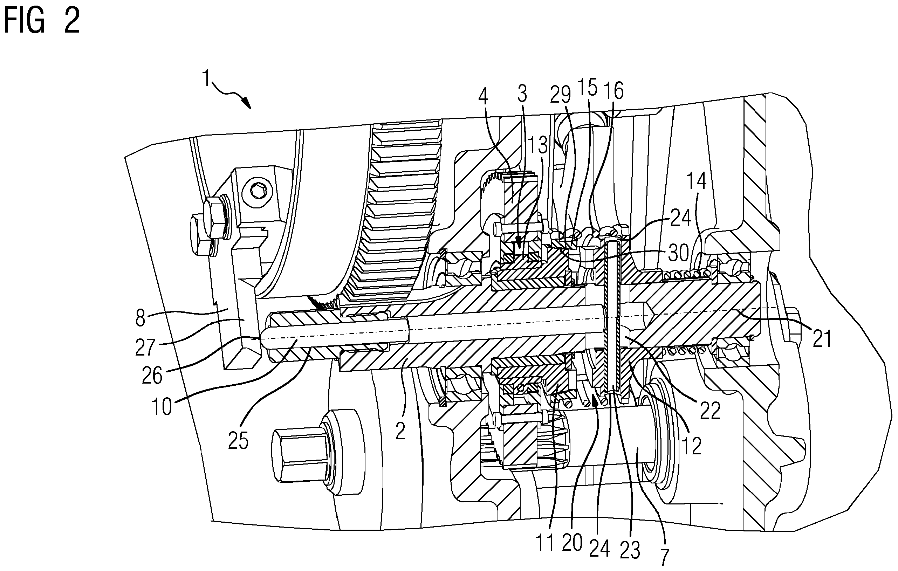

Die Figuren 1 und 2 zeigen ein Spanngetriebe 1 zum Spannen einer (nicht dargestellten) Speicherfeder eines Federspeicherantriebs in einer perspektivischen und teilweise geschnittenen Darstellung, wobei Figur 2 einen vergrößerten Ausschnitt der Figur 1 zeigt. Die Speicherfeder ist beispielsweise eine Einschaltfeder des Federspeicherantriebs, die Energie zum Schließen eines Strompfads eines Leistungsschalters speichert. Das Spanngetriebe 1 umfasst unter anderem ein Spannrad 9, eine Zwischenwelle 2 und ein Zwischenrad 4.

Das Spannrad 9 ist fest mit einer Kurvenscheibe 17 und einer Spannwelle 18 verbunden und über die Spannwelle 18 an die Speicherfeder gekoppelt.

Das Zwischenrad 4 ist über ein Kegelradgetriebe 19 von einem (nicht dargestellten) Spannmotor antreibbar.

Die Zwischenwelle 2 ist an das Spannrad 9 und das Zwischenrad 4 gekoppelt, um zum Spannen der Speicherfeder Drehungen des Zwischenrads 4 auf das Spannrad 9 zu übertragen. Die Kopplung zwischen der Zwischenwelle 2 und dem Spannrad 9 ist eine Zahnradkopplung, die von einem Zahnkranz des Spannrads 9 und einem dazu korrespondierenden Zahnradring der Zwischenwelle 2 gebildet wird.

Das Zwischenrad 4 ist über einen Freilauf 3 und eine Klauenkupplung 20 an die Zwischenwelle 2 gekoppelt, wobei der Freilauf 3 das Zwischenrad 4 mit der Klauenkupplung 20 verbindet. Die Klauenkupplung 20 weist eine drehfest an die Zwischenwelle 2 gekoppelte erste Kupplungsbacke 12, eine mit einem Freilaufinnenring 13 des Freilaufs 3 verbundene zweite Kupplungsbacke 11, einen zwischen den Kupplungsbacken 11, 12 angeordneten Synchronring 15 und ein Federelement 16 auf. Die Kupplungsbacken 11, 12 und der Synchronring 15 verlaufen jeweils ringförmig um die Zwischenwelle 2.

Die erste Kupplungsbacke 12 ist zwischen einer ersten Endstellung, in der sie an der zweiten Kupplungsbacke 11 anliegt und die sie beim Spannen der Speicherfeder annimmt, und einer zweiten Endstellung, in der sie von der zweiten Kupplungsbacke 11 getrennt ist und die sie in einem gespannten Zustand der Speicherfeder annimmt, axial, das heißt parallel zu einer Längsachse 21 der Zwischenwelle 2, verschiebbar. Dadurch koppelt die Klauenkupplung 20 den Freilauf 3 und das Zwischenrad 4 zum Spannen der Speicherfeder an die Zwischenwelle 2 und entkoppelt den Freilauf 3 und das Zwischenrad 4 in dem gespannten Zustand der Speicherfeder von der Zwischenwelle 2.

Der Synchronring 15 ist drehfest an die erste Kupplungsbacke 12 gekoppelt und relativ zu der ersten Kupplungsbacke 12 axial verschiebbar. Dazu weist der Synchronring 15 beispielsweise axial verlaufende Zähne auf, die in dazu korrespondierende Ausnehmungen in der ersten Kupplungsbacke 12 hineinragen. Oder die erste Kupplungsbacke 12 weist axial verlaufende Zähne auf, die in dazu korrespondierende Ausnehmungen in dem Synchronring 15 hineinragen. Andere drehfeste, aber axial verschiebbare Verbindungen des Synchronrings 15 mit der ersten Kupplungsbacke 12 sind ebenfalls möglich. Das Federelement 16 verläuft zwischen der ersten Kupplungsbacke 12 und dem Synchronring 15 spiralförmig um die Zwischenwelle 2, so dass das gespannte Federelement 16 eine axial wirkende Federkraft zwischen dem Synchronring 15 und der ersten Kupplungsbacke 12 ausübt.

Der Synchronring 15 wird beim Bewegen der ersten Kupplungsbacke 12 von der zweiten Endstellung in die erste Endstellung durch das Federelement 16 an die zweite Kupplungsbacke 11 gedrückt. Der Synchronring 15 und die zweite Kupplungsbacke 11 weisen zueinander korrespondierende Reibungsflächen 29, 30 auf, die beim Andrücken des Synchronrings 15 an die zweite Kupplungsbacke 11 aneinander anliegen und als Kegelstumpfflächen ausgeführt sind.

Der Freilauf 3 entkoppelt das Zwischenrad 4 von der Zwischenwelle 2 beim Spannen der Speicherfeder, wenn die Spannwelle 18 über einen oberen Totpunkt läuft.

Um die erste Kupplungsbacke 12 drehfest und axial verschiebbar an die Zwischenwelle 2 zu koppeln, weisen die erste Kupplungsbacke 12 und die Zwischenwelle 2 beispielsweise eine Verzahnung auf.

Um die erste Kupplungsbacke 12 von ihrer ersten Endstellung in die zweite Endstellung zu verschieben, weist die Zwischenwelle 2 im Bereich der ersten Kupplungsbacke 12 eine langlochartige Queröffnung 22 auf, die senkrecht zu der Längsachse 21 durch die Zwischenwelle 2 verläuft. Durch die Queröffnung 22 ist ein mit der ersten Kupplungsbacke 12 verbundenes Koppelement 23 geführt, das in der Queröffnung 22 zwischen einer die erste Endstellung der ersten Kupplungsbacke 12 definierenden ersten Position und einer die zweite Endstellung der ersten Kupplungsbacke 12 definierenden zweiten Position verschiebbar ist. In dem in den Figuren dargestellten Ausführungsbeispiel ist das Koppelement 23 als ein Rohr ausgebildet, dessen Enden in Ausnehmungen 24 in der ersten Kupplungsbacke 12 hineinragen. Alternativ kann das Koppelement 23 aber auch beispielsweise als ein Bolzen ausgeführt sein.

Ferner weist die Zwischenwelle 2 eine entlang ihrer Längsachse 21 verlaufende Längsöffnung 25 auf, die sich von der Queröffnung 22 zu einem spannradseitigen Ende der Zwischenwelle 2 erstreckt. In der Längsöffnung 25 ist ein Schaltstift 10 axial verschiebbar gelagert, der ein aus der Längsöffnung 25 heraus ragendes Absteuerende 26 aufweist und sich in der Längsöffnung 25 bis zu dem Koppelement 23 erstreckt.

An dem Spannrad 9 ist ein Absteuerelement 8 angeordnet, das das Absteuerende 26 des Schaltstifts 10 im gespannten Zustand der Speicherfeder zu der Längsöffnung 25 hin verschiebt, so dass das Koppelelement 23 von seiner ersten in seine zweite Position verschoben wird. Das Absteuerelement 8 weist ein radial von dem Spannrad 9 abstehendes Kontaktende mit einer schrägen Kontaktfläche 27 auf, die beim Verschieben des Schaltstifts 10 an dessen Absteuerende 26 anliegt. Das Absteuerelement 8 ist beispielsweise an einer Position an dem Spannrad 9 angeordnet, in der die Kontaktfläche 27 das Absteuerende 26 des Schaltstifts 10 kontaktiert, wenn sich das Spannrad 9 etwa drei Grad weitergedreht hat, nachdem die Spannwelle 18 den oberen Totpunkt erreicht hat.

An die erste Kupplungsbacke 12 ist ferner eine Rückstellfeder 14 gekoppelt, die spiralartig um die Zwischenwelle 2 herum verläuft. Die Rückstellfeder 14 greift an einem von der zweiten Kupplungsbacke 11 abgewandten Ende der ersten Kupplungsbacke 12 an und übt in der zweiten Endstellung der ersten Kupplungsbacke 12 eine Federkraft in Richtung der ersten Endstellung auf die erste Kupplungsbacke 12 aus.

Das Spanngetriebe 1 weist außerdem einen Arretierungsmechanismus 28 zum lösbaren Arretieren des Spannrads 9 in dem gespannten Zustand der Speicherfeder auf. Der Arretierungsmechanismus 28 des in den Figuren gezeigten Ausführungsbeispiels weist eine an der Kurvenscheibe 17 angeordnete Kurvenscheibenrolle 5 und eine Einklinke 6, die die Kurvenscheibenrolle 5 zum Arretieren des Spannrads 9 fixiert, auf. Nach dem Trennen der Kupplungsbacken 11, 12 läuft die Kurvenscheibenrolle 5 gegen die Einklinke 6 und wird von der Einklinke 6 in dieser Position arretiert, beispielsweise wenn sich das Spannrad 9 etwa zehn Grad weitergedreht hat, nachdem die Spannwelle 18 den oberen Totpunkt erreicht hat. Dabei wird ein Abprallen der Kurvenscheibenrolle 5 von der Einklinke 6 durch den Freilauf 3 und eine Rücklaufsperre auf einer an das Zwischenrad 4 gekoppelten Zusatzwelle 7 verhindert.

Da die Kupplungsbacken 11, 12 im gespannten Zustand der Speicherfeder voneinander getrennt sind, werden die Zwischenwelle 2 und an sie gekoppelte Komponenten wie die Einklinke 6 und die Kurvenscheibenrolle 5 im gespannten Zustand der Speicherfeder von dem Zwischenrad 4 entkoppelt und nicht durch das Zwischenrad 4, beispielsweise bei einem Nachlaufen des Spannmotors, belastet und verspannt. Dadurch werden vorteilhaft insbesondere die Belastung der Einklinke 6, der Kurvenscheibenrolle 5 und des Freilaufs 3 reduziert und eine Abnutzung oder Schädigung dieser Komponenten des Spanngetriebes 1 durch diese Belastung verhindert.

Zur Freigabe der in der gespannten Speicherfeder gespeicherten Energie wird die Kopplung der Einklinke 6 an die Kurvenscheibenrolle 5 gelöst. Die sich entspannende Speicherfeder dreht das Spannrad 9 in einer derselben Drehrichtung wie beim Spannen der Speicherfeder, wodurch das Absteuerelement 8 den Schaltstift 10 wieder freigibt und die erste Kupplungsbacke 12 durch die Rückstellfeder 14 von der zweiten Endstellung in die erste Endstellung geschoben wird, so dass die Klauenkupplung 20 wieder geschlossen wird. Dabei wird der Synchronring 15 durch das Federelement 16 an die zweite Kupplungsbacke 11 gedrückt. Das Andrücken des Synchronrings 15 an die zweite Kupplungsbacke 11 erzeugt eine Reibung zwischen der Reibungsfläche 29 des Synchronrings 15 und der Reibungsfläche 30 der zweiten Kupplungsbacke 11. Die von dieser Reibung erzeugt Reibungskraft zwischen dem Synchronring 15 und der zweiten Kupplungsbacke 11 passt eine Drehzahl der zweiten Kupplungsbacke 11 allmählich der Drehzahl des Synchronrings 15 und der ersten Klauenkupplung 12 an. Nach dem Schließen der Klauenkupplung 20 ist das Spanngetriebe 1 zum erneuten Spannen der Speicherfeder bereit.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Spanngetriebe (1) zum Spannen einer Speicherfeder eines Federspeicherantriebs, das Spanngetriebe (1) umfassend
- ein an die Speicherfeder gekoppeltes Spannrad (9),
- eine an das Spannrad (9) gekoppelte Zwischenwelle (2),
- ein von einem Spannmotor antreibbares Zwischenrad (4),
- einen an das Zwischenrad (4) gekoppelten Freilauf (3),
- einen Arretierungsmechanismus (28) zum lösbaren Arretieren des Spannrads (9) in einem gespannten Zustand der Speicherfeder, das Spanngetriebe **gekennzeichnet durch**
- eine Klauenkupplung (20) mit einer drehfest an die Zwischenwelle (2) gekoppelten ersten Kupplungsbacke (12), einer mit dem Freilauf (3) verbundenen zweiten Kupplungsbacke (11) und einem zwischen den Kupplungsbacken (11, 12) angeordneten und drehfest an die erste Kupplungsbacke (12) gekoppelten Synchronring (15),
- wobei die erste Kupplungsbacke (12) zwischen einer ersten Endstellung, in der sie an der zweiten Kupplungsbacke (11) anliegt und die sie beim Spannen der Speicherfeder animmt, und einer zweiten Endstellung, in der sie von der zweiten Kupplungsbacke (11) getrennt ist und die sie in einem gespannten Zustand der Speicherfeder annimmt, parallel zu einer Längsachse (21) der Zwischenwelle (2) verschiebbar ist,
- und der Synchronring (15) beim Bewegen der ersten Kupplungsbacke (12) von der zweiten Endstellung in die erste Endstellung an die zweite Kupplungsbacke (11) gedrückt wird.

2. Spanngetriebe (1) nach Anspruch 1,
**dadurch gekennzeichnet, dass**
der Synchronring (15) relativ zu der ersten Kupplungsbacke (12) parallel zu der Längsachse (21) der Zwischenwelle (2) verschiebbar ist und an die erste Kupplungsbacke (12) durch ein Federelement (16) gekoppelt ist, das eine zu der Längsachse (21) der Zwischenwelle (2) parallele Federkraft zwischen dem Synchronring (15) und der ersten Kupplungsbacke (12) ausübt.

3. Spanngetriebe (1) nach Anspruch 1 oder 2,
**dadurch gekennzeichnet, dass**
der Synchronring (15) und die zweite Kupplungsbacke (11) zueinander korrespondierende Reibungsflächen (29, 30) aufweisen, die beim Andrücken des Synchronrings (15) an die zweite Kupplungsbacke (11) aneinander anliegen und als Kegelstumpfflächen ausgeführt sind.

4. Spanngetriebe (1) nach einem der vorhergehenden Ansprüche,
**dadurch gekennzeichnet, dass**
die erste Kupplungsbacke (12) durch ein Koppelelement (23) an die Zwischenwelle (2) gekoppelt ist, wobei das Koppelelement (23) durch eine senkrecht zu einer Längsachse (21) der Zwischenwelle (2) verlaufende Queröffnung (22) in der Zwischenwelle (2) geführt ist und in der Queröffnung (22) zwischen einer die erste Endstellung der ersten Kupplungsbacke (12) definierenden ersten Position und einer die zweite Endstellung der ersten Kupplungsbacke (12) definierenden zweiten Position parallel zu der Längsachse (21) der Zwischenwelle (2) verschiebbar ist.

5. Spanngetriebe (1) nach Anspruch 4,
**dadurch gekennzeichnet, dass**
das Koppelelement (23) als ein Rohr oder Bolzen ausgebildet ist, dessen Längsachse senkrecht zur Längsachse (21) der Zwischenwelle (2) angeordnet ist und dessen Enden in Ausnehmungen (24) in der ersten Kupplungsbacke (12) hineinragen.

6. Spanngetriebe (1) nach Anspruch 4 oder 5,
**gekennzeichnet durch**
einen Schaltstift (10), der in einer entlang der Längsachse (21) der Zwischenwelle (2) verlaufenden Längsöffnung (25) in der Zwischenwelle (2) verschiebbar gelagert und an das Koppelelement (23) gekoppelt ist.

7. Spanngetriebe (1) nach Anspruch 6,
**dadurch gekennzeichnet, dass**
ein Absteuerende (26) des Schaltstifts (10) aus der Längsöffnung (25) heraus ragt und an dem Spannrad (9) ein Absteuerelement (8) angeordnet ist, das das Absteuerende (26) des Schaltstifts (10) im gespannten Zustand der Speicherfeder zu der Längsöffnung (25) hin verschiebt, so dass das Koppelelement (23) von seiner ersten in seine zweite Position verschoben wird.

8. Spanngetriebe (1) nach Anspruch 7,
**dadurch gekennzeichnet, dass**
das Absteuerelement (8) ein radial von dem Spannrad (9) abstehendes Kontaktende mit einer schrägen Kontaktfläche (27) aufweist, die beim Verschieben des Schaltstifts (10) an dessen Absteuerende (26) anliegt.

9. Spanngetriebe (1) nach einem der vorhergehenden Ansprüche,
**dadurch gekennzeichnet, dass**
die beiden Kupplungsbacken (11, 12) jeweils ringförmig um die Zwischenwelle (2) herum verlaufen.

10. Spanngetriebe (1) nach einem der vorhergehenden Ansprüche,
**gekennzeichnet durch**
eine an die erste Kupplungsbacke (12) gekoppelte Rückstellfeder (14), die in der zweiten Endstellung der ersten Kupplungsbacke (12) eine Federkraft in Richtung der ersten Endstellung auf die erste Kupplungsbacke (12) ausübt.

11. Spanngetriebe (1) nach einem der vorhergehenden Ansprüche,
**dadurch gekennzeichnet, dass**
der Freilauf (3) einen um die Zwischenwelle (2) herum verlaufenden Freilaufring (13) aufweist und die zweite Kupplungsbacke (11) mit dem Freilaufring (13) verbunden ist.

12. Spanngetriebe (1) nach einem der vorhergehenden Ansprüche,
**dadurch gekennzeichnet, dass**
das Zwischenrad (4) über ein Kegelradgetriebe (19) durch den Spannmotor antreibbar ist.

13. Spanngetriebe (1) nach einem der vorhergehenden Ansprüche,
**dadurch gekennzeichnet, dass**
der Arretierungsmechanismus (28) eine fest mit dem Spannrad (9) verbundene Kurvenscheibenrolle (5) und eine Einklinke (6), die die Kurvenscheibenrolle (5) zum Arretieren des Spannrads (9) fixiert, aufweist.

14. Federspeicherantrieb mit einem gemäß einem der vorhergehenden Ansprüche ausgebildeten Spanngetriebe (1).

## Claims

1. Tensioning gear mechanism (1) for tensioning a stored-energy spring of a spring-type stored-energy drive, the tensioning gear mechanism (1) comprising
- a tensioning wheel (9) coupled to the stored-energy spring,
- an intermediate shaft (2) coupled to the tensioning wheel (9),
- an intermediate wheel (4) capable of being driven by a tensioning motor,
- a freewheel (3) coupled to the intermediate wheel (4),
- a locking mechanism (28) for separable locking of the tensioning wheel (9) in a tensioned state of the stored-energy spring, the tensioning gear mechanism being **characterized by**
- a claw coupling (20) with a first coupling jaw (12) coupled to the intermediate shaft (2) in torsion-resistant manner, with a second coupling jaw (11) connected to the freewheel (3), and with a synchronizer ring (15) arranged between the coupling jaws (11, 12) and coupled to the first coupling jaw (12) in torsion-resistant manner,
- wherein the first coupling jaw (12) is displaceable, parallel to a longitudinal axis (21) of the intermediate shaft (2), between a first end position, in which it abuts the second coupling jaw (11) and which it assumes in the course of the tensioning of the stored-energy spring, and a second end position, in which it has been separated from the second coupling jaw (11) and which it assumes in a tensioned state of the stored-energy spring,
- and the synchronizer ring (15) is pressed against the second coupling jaw (11) when the first coupling jaw (12) is moving from the second end position into the first end position.

2. Tensioning gear mechanism (1) according to Claim 1,
**characterized in that**
the synchronizer ring (15) is displaceable, parallel to the longitudinal axis (21) of the intermediate shaft (2), relative to the first coupling jaw (12) and is coupled to the first coupling jaw (12) by a spring element (16) which exerts a spring force parallel to the longitudinal axis (21) of the intermediate shaft (2) between the synchronizer ring (15) and the first coupling jaw (12).

3. Tensioning gear mechanism (1) according to Claim 1 or 2,
**characterized in that**
the synchronizer ring (15) and the second coupling jaw (11) exhibit mutually corresponding friction surfaces (29, 30) which abut one another when the synchronizer ring (15) is being pressed against the second coupling jaw (11) and which have been realized as frustoconical surfaces.

4. Tensioning gear mechanism (1) according to one of the preceding claims,
**characterized in that**
the first coupling jaw (12) is coupled to the intermediate shaft (2) by a coupling element (23), wherein the coupling element (23) is guided in the intermediate shaft (2) through a transverse opening (22) extending perpendicular to a longitudinal axis (21) of the intermediate shaft (2), and is displaceable in the transverse opening (22), parallel to the longitudinal axis (21) of the intermediate shaft (2), between a first position, defining the first end position of the first coupling jaw (12), and a second position defining the second end position of the first coupling jaw (12).

5. Tensioning gear mechanism (1) according to Claim 4,
**characterized in that**
the coupling element (23) takes the form of a tube or bolt, the longitudinal axis of which is arranged perpendicular to the longitudinal axis (21) of the intermediate shaft (2), and the ends of which project into recesses (24) in the first coupling jaw (12).

6. Tensioning gear mechanism (1) according to Claim 4 or 5,
**characterized by**
a switching pin (10) which is supported so as to be displaceable in the intermediate shaft (2) in a longitudinal opening (25) extending along the longitudinal axis (21) of the intermediate shaft (2) and which is coupled to the coupling element (23).

7. Tensioning gear mechanism (1) according to Claim 6,
**characterized in that**
a resetting end (26) of the switching pin (10) projects out of the longitudinal opening (25), and a resetting element (8) is arranged on the tensioning wheel (9), which displaces the resetting end (26) of the switching pin (10) in the tensioned state of the stored-energy spring towards the longitudinal opening (25), so that the coupling element (23) is displaced from its first position into its second position.

8. Tensioning gear mechanism (1) according to Claim 7,
**characterized in that**
the resetting element (8) exhibits a contact end, protruding radially from the tensioning wheel (9), with an oblique contact surface (27) which in the course of the displacement of the switching pin (10) abuts the resetting end (26) thereof.

9. Tensioning gear mechanism (1) according to one of the preceding claims,
**characterized in that**
the two coupling jaws (11, 12) each extend in the form of a ring around the intermediate shaft (2).

10. Tensioning gear mechanism (1) according to one of the preceding claims,
**characterized by**
a restoring spring (14) coupled to the first coupling jaw (12), which in the second end position of the first coupling jaw (12) exerts a spring force on the first coupling jaw (12) in the direction of the first end position.

11. Tensioning gear mechanism (1) according to one of the preceding claims,
**characterized in that**
the freewheel (3) exhibits a freewheel ring (13) extending around the intermediate shaft (2), and the second coupling jaw (11) is connected to the freewheel ring (13).

12. Tensioning gear mechanism (1) according to one of the preceding claims,
**characterized in that**
the intermediate wheel (4) is capable of being driven by the tensioning motor via a bevel-gear transmission (19).

13. Tensioning gear mechanism (1) according to one of the preceding claims,
**characterized in that**
the locking mechanism (28) exhibits a cam-disc roller (5), firmly connected to the tensioning wheel (9), and a latch (6) which fixes the cam-disc roller (5) for the purpose of locking the tensioning wheel (9).

14. Spring-type stored-energy drive with a tensioning gear mechanism (1) designed according to one of the preceding claims.

## Revendications

1. Mécanisme (1) de tension pour bander le ressort accumulateur d'un entraînement à ressort accumulateur, le mécanisme (1) tendeur comprenant
- une roue (9) tendeuse accouplée au ressort accumulateur,
- un arbre (2) intermédiaire accouplé à la roue (9) tendeuse,
- une roue (4) intermédiaire pouvant être entraînée par un moteur tendeur,
- une roue libre (3) accouplée à la roue (4) intermédiaire,
- un mécanisme (28) d'arrêt pour arrêter de manière amovible la roue (9) tendeuse dans un état bandé du ressort accumulateur, le mécanisme de tension étant **caractérisé par**
- un accouplement (20) à griffes ayant une première mâchoire (12) d'accouplement solidaire en rotation de l'arbre (2) intermédiaire, une deuxième mâchoire (11) d'accouplement reliée à la roue libre (3) et un anneau (15) de synchronisation, disposé entre les mâchoires (11, 12) d'accouplement et solidaire en rotation de la première mâchoire (12) d'accouplement,
- dans lequel la première mâchoire (12) d'accouplement peut coulisser parallèlement à un axe (21) longitudinal de l'arbre (2) intermédiaire entre une première position d'extrémité, dans laquelle elle s'applique à la deuxième mâchoire (11) d'accouplement et qu'elle prend lors du bandage du ressort accumulateur, et une deuxième position d'extrémité, dans laquelle elle est séparée de la deuxième mâchoire (11) d'accouplement et qu'elle prend dans un état bandé du ressort accumulateur,
- et l'anneau (15) de synchronisation est, lorsque la première mâchoire (12) d'accouplement passe de la deuxième position d'extrémité à la première position d'extrémité, poussé sur la deuxième mâchoire (11) d'accouplement.

2. Mécanisme (1) de tension suivant la revendication 1,
**caractérisé en ce que**
l'anneau (15) de synchronisation peut par rapport à la première mâchoire (12) d'accouplement coulisser parallèlement à l'axe (11) longitudinal de l'arbre (2) intermédiaire et est accouplé à la première mâchoire (12) d'accouplement par un élément (16) de ressort, qui applique entre l'anneau (15) de synchronisation et la première mâchoire (12) d'accouplement une force de ressort parallèle à l'axe (21) longitudinal de l'arbre (2) intermédiaire.

3. Mécanisme (1) de tension suivant la revendication 1 ou 2,
**caractérisé en ce que**
l'anneau (15) de synchronisation et la deuxième mâchoire (11) d'accouplement ont des surfaces (29, 30) de friction, qui se correspondent l'une à l'autre et qui, lorsque l'anneau (15) de synchronisation est poussé sur la deuxième mâchoire (11) d'accouplement, s'appliquent l'une à l'autre et sont réalisées en surface tronconique.

4. Mécanisme (1) de tension suivant l'une des revendications précédentes,
**caractérisé en ce que**
la première mâchoire (12) d'accouplement est accouplée à l'arbre (2) intermédiaire par un élément (23) d'accouplement, l'élément (23) d'accouplement étant guidé par une ouverture (22) transversale de l'arbre (2) d'accouplement, s'étendant perpendiculairement à un axe (21) longitudinal de l'arbre (2) intermédiaire, et pouvant coulisser parallèlement à l'axe (21) longitudinal de l'arbre (2) intermédiaire dans l'ouverture (22) transversale entre une première position, définissant la première position d'extrémité de la première mâchoire (12) d'accouplement, et une deuxième position, définissant la deuxième position d'extrémité de la première mâchoire (12) d'accouplement.

5. Mécanisme (1) de tension suivant la revendication 4,
**caractérisé en ce que**
l'élément (23) d'accouplement est constitué sous la forme d'un tube ou d'un axe, dont l'axe longitudinal est perpendiculaire à l'axe (21) longitudinal de l'arbre (2) intermédiaire et dont les extrémités pénètrent dans des évidements (24) de la première mâchoire (12) d'accouplement.

6. Mécanisme (1) de tension suivant la revendication 4 ou 5,
**caractérisé par**
une broche (10) de manœuvre, qui est montée coulissante dans une boutonnière (25) de l'arbre (2) intermédiaire s'étendant suivant l'axe (21) longitudinal de l'arbre (2) intermédiaire et qui est accouplée à l'élément (23) d'accouplement.

7. Mécanisme (1) de tension suivant la revendication 6,
**caractérisé en ce que**
une extrémité (26) de commande de la broche (10) de manœuvre dépasse de la boutonnière (25) et sur la roue (9) tendeuse est monté un élément (8) de commande, qui déplace l'extrémité (26) de commande de la broche (10) de manœuvre lorsque le ressort accumulateur est à l'état bandé vers la boutonnière (25) de manière à faire passer l'élément (23) de couplage de sa première à sa deuxième position.

8. Mécanisme (1) de tension suivant la revendication 7,
**caractérisé en ce que**
l'élément (8) de commande a une extrémité de contact en saillie de la roue (9) tendeuse et ayant une surface (27) de contact inclinée, qui, lorsque la broche (10) de manœuvre est déplacée, s'applique à son extrémité (26) de commande.

9. Mécanisme (1) de tension suivant l'une des revendications précédentes,
**caractérisé en ce que**
les deux mâchoires (11, 12) d'accouplement s'étendent chacune annulairement autour de l'arbre (2) intermédiaire.

10. Mécanisme (1) de tension suivant l'une des revendications précédentes,
**caractérisé par**
un ressort (14) de rappel qui est accouplé à la première mâchoire (12) d'accouplement et qui, dans la deuxième position d'extrémité de la première mâchoire (12) d'accouplement, applique à la première mâchoire (12) d'accouplement une force de ressort dans la direction de la première position d'extrémité.

11. Mécanisme (1) de tension suivant l'une des revendications précédentes,
**caractérisé en ce que**
la roue libre (3) a une bague (13) de roue libre s'étendant autour de l'arbre (2) intermédiaire et la deuxième mâchoire (11) d'accouplement est reliée à la bague (13) de roue libre.

12. Mécanisme (1) de tension suivant l'une des revendications précédentes,
**caractérisé en ce que**
la roue (2) intermédiaire peut être entrainée par le moteur tendeur par l'intermédiaire d'un engrenage (19) conique.

13. Mécanisme (1) de tension suivant l'une des revendications précédentes,
**caractérisé en ce que**
le mécanisme (28) d'arrêt a un galet (5) de came relié fixement à la roue (9) tendeuse et un cliquet (6) qui immobilise le galet (5) de came pour arrêter la roue (9) tendeuse.

14. Entraînement à ressort accumulateur, ayant un mécanisme (1) tendeur constitué suivant l'une des revendications précédentes.
